# EUROPEAN PATENT SPECIFICATION

(11) **EP 1 671 688 B1**
(45) Date of publication and mention of the grant of the patent: **16.06.2010**
(21) Application number: 04257876.5
(22) Date of filing: 16.12.2004
(51) Int. Cl.: B01D 3/34, B01D 3/00, C10B 53/00

(54) **Distillation apparatus and method**
Destillationsvorrichtung und Destillationsverfahren
Appareil et procédé de distillation

(43) Date of publication of application: 21.06.2006
(73) Proprietor: Riser Business Services Limited, 52 Upper Street London N1 0QH (GB)
(72) Inventor: Della Monica, Marzio, Claro (Ticino) (CH)
(74) Representative: Kenyon, Sarah Elizabeth

(56) References cited:
- EP-A- 1 108 955
- US-A- 4 029 550
- US-A- 4 208 252
- US-A- 4 588 477
- US-A- 5 435 890
- US-A1- 2002 008 010

## Description

The present invention relates to an apparatus and method for performing distillation. More preferably, the present invention relates to an apparatus and method for performing distillation wherein a substance to be distilled is heated and simultaneously pressurised by the addition of oxygen or ozone prior to condensing.

Distillation is a process used to convert a liquid into a vapour and subsequently condensing the vapour back into a liquid. Distillation can be used to separate liquids from non-volatile solids, or to separate two or more liquids having different boiling points.

A distiller, which is used to perform distillation, preferably consists of a container in which a mixture of substances to be separated is heated to form a vapour, a condenser to cool the vapour back into a liquid (the distillate), and a container to collect the distillate. When a mixture of substances is heated, the most volatile substance or the substance having the lowest boiling point distils first, and thus is separated from the other substances first.

Fractional distillation is a specific form of distillation performed to separate the components of a substance, such as crude oil, into fractions. For example, separating crude oil into gasoline, kerosene and lubricating oil.

During fractional distillation, crude oil is pumped from a storage unit, at ambient temperature, through a heating section to raise the temperature of the crude oil so that it becomes a mixture of vaporised and unvaporised components. The mixture is then passed into a fractionating column which is maintained at substantially atmospheric pressure. A fractionating column is a vertical column containing fractionating trays at spaced intervals. The vaporised components rise up through the column and are condensed into a liquid by a condenser positioned at the top of the fractionating column. The condensed liquid then descends through the column, from tray to tray, contacting the rising vaporised components as they pass through the trays. The condensed liquid absorbs heavier constituents from the vaporised components and in turn gives up lighter constituents to the vaporised components, so that only the most volatile material proceeds in the form of a vapour to a receiver while less volatile material is returned as liquid to the trays. Eventually an equilibrium is reached in which there is a continual gradation of temperature and oil properties throughout the column, with the lightest constituents on the top tray and the heaviest on the bottom try. The products can be withdrawn from the trays at several points throughout the column.

US4208252 discloses an apparatus for the treatment of rubber and plastic wastes, comprising in series: an extruder for heating and melting rubber and plastic wastes to extrude the molten wastes; a decomposing section for heating the molten wastes to prepare decomposed products while optionally separating residues therefrom; a dry-distilling section for gasifying the decomposed products by dry-distillation; and a cooling section for cooling the dry-distilled products to separate gaseous materials from liquid materials.

In US5435890, an apparatus for recycling used automobile rubber tires is described in which small pieces of rubber tires are progressively fed into a vertical reactor of the counterflow type in which the material progressively descends downward through the reactor with process gases passing upward through the downwardly descending material to decompose and volatilize the rubber material. Oxygen-bearing gas is injected into the reactor to bum a portion of the rubber carbon to generate hot combustion gases that ascend upwardly to pyrolitically decompose the rubber pieces, and to volatilize such material. The gases and volatilized rubber materials and oils are removed from the reactor at a temperature of approximately 117°C (350 DEG F). at an elevation below the top layer of the rubber pieces in a high velocity stream to maintain the oils entrained in the air stream. The air stream is directed into condensers for condensing the rubber process oils. The raw rubber process oils are subdivided to obtain a residue heavy fraction rubber oil material having a flash point of greater than 171°C (340 DEG F). and greater at one atmosphere and a boiling point of greater than 232°C (450 DEG F). at 20 mm Hg.

However, the known types of distillation apparatus are expensive and can only be used to process products in liquid form, i.e. crude oil. Additionally, the known types of distillation apparatus can not be used to process recycled products. The distillation apparatus and method of the present invention aims to alleviate these problems.

In one aspect of the present invention, a distillation apparatus comprises the features set forth in claim 1.

In a second aspect of the present invention, a method of distillation is as defined in claim 9.

The apparatus and method of the present invention is advantages over known distillation apparatus as it can process products which are not originally in liquid form, but instead in solid form, such as a car tyre. In this case, material which was apparently waste becomes a source of fuel.

Additionally, compared with known distillation apparatus, the apparatus and method of the present invention provides greater efficiency because it eliminates air from the oxidation stage. Since air has a high nitrogen N₂ content, it obstructs the reaction and brings about a 3 to 4 times increase in the final volume of gas generated by the distillation with a consequent drop in the specific output of liquid condensate per kg of product processed. Therefore, eliminating air from the oxidation stage results in a reduction in costs and, at constant dimensions, the plant's production capacity can be increased. Furthermore, all the chemical reactions involved in the distillation process are accelerated since the oxidants, such as oxygen O₂ and ozone O₃, have reaction coefficients K some 1000 times greater than that of air. Consequently, distillation of the product takes less time.

Embodiments of the present invention will now be described by way of further example only and with reference to the accompanying drawing, in which:

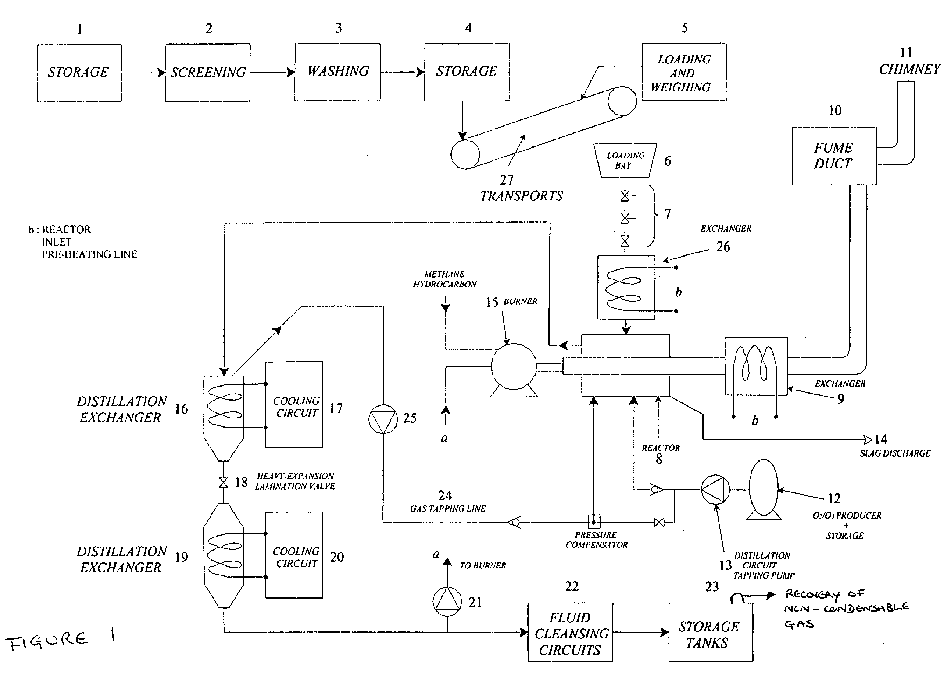

Figure 1 illustrates an apparatus of the present invention.

The distillation apparatus and method of the present invention can be used in the processing of certain aromatic chain substances, such as Buna rubber, styrene, and tyres etc. in order to transform the aromatic chains from an initial solid state to a final fluid state.

With reference to figure 1, the apparatus of the present invention includes a product loading section. The product loading section may include a storage section 1 in which the unprocessed substance is stored. The substance may then be purified by screening and/or washing in sections 2 and 3, before being stored in a second storage section 4. A transport section 27 may be used to transfer the screened/washed substance to the weighing/loading section 5. Following weighing/loading, the substance is held in loading section 6, prior to being processed in the apparatus of the present invention.

Although the apparatus in figure 1 comprises a storage section 1, a screening section 2, a washing section 3, a second storage section 4, a transport section 27, a weighing/loading section 5 and a loading section 6, these feature are not essential to the apparatus of the present invention. Any combination of the above mentioned sections, only some of the sections, or none of the sections, may be used as a product-loading section.

The product-loading section runs at substantially atmospheric pressure so that up to the loading section 6 the apparatus operates as an "open" circuit.

A pressure-offset area 7, is connected between the outlet of the loading section 6 and the inlet of the reactor 8. The pressure offset area 7, which in figure 1 is illustrated as a linear sequence of three valves, allows the (screened/washed) solid substance to move from a substantially atmospheric pressure area 6 to a pressurised area in the reactor 8.

The reactor 8 comprises two sections, a pressurised reaction chamber in which the solid substance is inserted, and an internal heating chamber, which is devoted to heating the solid substance to be processed. The internal heating chamber operates at atmospheric pressure and uses a heating circuit, such as a burner 15, to heat the solid substance in the pressurised reaction chamber to a high temperature. For example, the reactor 8 may be heated to a temperature in the range of 550°C to 1050 °C, depending on the material being processed. Although burner 15 is used to heat the reactor 8 any other heating apparatus which is suitable may be used.

Additionally, a heat exchanger 26 (or any other suitable heating apparatus) may be used to pre-heat the substance prior to its input into the reactor 8. However, the apparatus of the present invention may function without the inclusion of a heat

The pressurised reaction chamber of the reactor 8 is capable of operating at a pressure substantially greater than atmospheric pressure, for example between 1 to 10 bar.

The pressure in the pressurised reaction chamber is increased, by way of an oxygen O₂/ozone O₃ enricher section 12 and a pump 13. The oxygen O₂/ozone O₃ enricher section 12 produces and stores oxygen O₂ or ozone O₃. The oxygen O₂ or ozone O₃ is introduced into the pressurised reaction chamber at a pressure, which may vary from 1 bar up to 10 bar depending on the material being processed, and an input temperature of approximately 10°C. The heavy, comprehensive presence of oxygen O₂/ozone O₃ pressurises the substance held in the pressurised reaction chamber and creates a highly concentrated initial gaseous products as there is an absence of air as an oxidant.

The substance inserted into the pressurised reaction chamber of the reactor 8 is heated and pressurised substantially simultaneously.

In one example 0.9 kg to 1.2 kg of oxygen O₂ is required to liquefy 1 kg of Buna rubber/styrene or styrene/tyre, whereas 70g to 100 g of ozone O₃ is required to liquefy 1 kg of Buna rubber/styrene or styrene/tyre.

The oxygen O₂/ozone O₃ enricher section 12 comprises up to 100% of the oxidant stoichiometry needed for the elements of the substance being processed to react with one another.

The increased pressure and elevated oxidant content increases the rate of reaction of the system, improving the overall performance of the system. Additionally, the system exhibits a reduction in the volume of gases produced with a consequent increase in the output of liquid condensate per kg of product processed. Thus, a smaller plant is required and production costs can be reduced.

The internal heating chamber, which uses the burner 15 to create a hot distilling area, communicates with the outside through an exhaust section which is coupled to a fume duct 10 and a chimney 11. An energy recovery facility 9 is connected between the reactor 8 and the chimney 11 on the exhaust section. The energy recovery facility 9 uses the exhaust heat generated as a by-product by the burner 15 to supply energy to the sections of the apparatus where thermal energy is required. The energy recovery facility 9, increases the efficiency of the apparatus by reducing the amount of external energy required by the apparatus and thus reducing the running cost of the apparatus. However, an energy recovery facility 9 is not essential to the apparatus of the present invention.

As a result of the heating and pressurising of the substance in the reactor 8, the substance is converted into a pressurised gas. The pressurised gas is transferred from the reactor 8 to a first cooling section which comprises a first distillation exchanger 16, which in figure 1 is illustrated as a heat exchanger although any suitable cooling system could be utilised, and a first cooling circuit 17. The substance is prevented from leaving the reactor 8 prior to being heated and pressurised to the predetermined temperature/pressure by a valve.

The first distillation exchanger 16 lowers the temperature of the pressurised gas in order to condense the gas in a first distilling step. The first cooling circuit 17, which is coupled to the first distillation exchanger 16, can be used to adjust the temperature at which the pressurised gas is cooled and thus adjust the temperature at which the first distilling step occurs. The cooling procedure makes it possible to separate the noble components of the substance from the less-noble and non-noble components and minimise the impurity deposits in the apparatus.

Those components which are condensable at atmospheric pressure and temperature are defined as the noble components, the principal of which are: benzene, pentane, butane, toluene, naphthalene, all of which have good caloric power. In combination with the condensable (noble) components, there are also less-noble components which remain in gaseous form and have very high caloric power, but which do not condense, such as: carbon monoxide CO, methane CH₄, hydrogen H₂, propane etc.

If the reaction has been performed with tyres, then the reinforcing steel from the tyre carcass will be obtained as a residual product which can be resold as a valuable material. The non-noble component comprises the residual ash from the reaction, which may be used as a road surfacing material if mixed with the tar normally used for this purpose.

Both the noble components and the less-noble components leave the reactor 8 together. The noble components condense, whilst the less-noble components remain in gaseous form and can be withdrawn from the upper part of a storage tank 23 following cooling in the first and second cooling sections. These gases can be used in spark ignition engines.

A tapping section 24 is connected between the first distillation exchanger 16 and the reactor 8. Tapping is performed in order to ensure that a proportion of gas, which may vary from 0% to 100%, is returned to the reactor 8 to be refined further, so that the end product has a predetermined purity. The proportion of recirculated gas is determined by a central control unit. The central control unit monitors the distillation process and analysis's the chemical components of the gases until the gas leaving the circuit 16 has the predetermined purity.

The purpose of tapping section 24 is to ensure that the best possible condensable distillate (liquid) is obtained, to decrease the residual gaseous (less-noble) components leaving the circuit 16, and to enable the production of a particularly clean liquid final product.

The valve 18, tapping section 24 and pump 25 manage the flow within the reactor 8. These all interface with the central control unit which comprises pressure and temperature sensors and gas analysers.

Prior to insertion in the reactor 8, the returned gases are pressurised by the oxygen O₂/ozone O₃ enricher section 12 and the pump 25. The oxygen O₂/ozone O₃ enricher section 12 adds oxygen O₂/ozone O₃ to the returned gases, so that the returned gases are at the same pressure as the substance already being processed in the rector 8.

The gases exit the first distillation exchanger 16 via a valve 18, which in figure 1 is illustrated as a heavy expansion lamination valve, although any suitable valve can be utilised. The valve 18 controls the outflow of gases from the first distillation exchanger 16 into a second cooling section for further cooling. In one example, the first cooling section 16 and the valve 18 adjusts the outlet temperature of the gas to approximately 150°C. However, the present invention is not limited to this example.

The second cooling section comprises a second distillation exchanger 19, which in figure 1 is illustrated as a heat exchanger although any suitable cooling system could be utilised, and a second cooling circuit 20. The valve 18 enables considerable adiabatic expansion inside the second cooling section.

The second distillation exchanger 19 lowers the temperature of the gases further, super cooling them to, for example, temperatures in a range of 3°C to 10 °C, in order to further condense the gas components in a second distilling step. The second cooling circuit 20, which is coupled to the second distillation exchanger 19, can be used to adjust the temperature at which the gas components are further cooled and thus adjust the temperature at which the second distilling step occurs.

The second distillation exchanger 19 is more delicate than the first distillation exchanger 16 and is capable of performing a more selective distilling step.

The controlled expansion provided by valve 18 combined with further cooling of the gases in the second distillation exchanger 19 results in the subsequent condensation of the gas to a final fluid state of the substance.

Finally, the resultant fluid obtained from the apparatus of the present invention, may be further mechanically or chemically purified in purifying section 22 by methods known in the art, for example by selective chemical removal of sulphur-based products if present or by micro-filtering.

Following processing the resultant fluid can be stored in tanks 23 for subsequent use as high-grade heat-producing fuel, depending on what the initial substance was, in devices or appliances best suited for the type of product ultimately obtained.

Although the apparatus of the present invention is described as comprising a first and second cooling section, the apparatus of the present invention may utilise as many cooling sections and/or tapping sections 24 as required to create a refined fluid substance. However, two cooling sections are sufficient to achieve the result of good liquefaction.

If the apparatus comprised only a first cooling section, the amount of impurities deposited would be severe. The use of two cooling sections means that it is possible to construct two different, readily inspectable machines with different cooling characteristics in order to avoid points where unwanted impurity deposits (particulates) occurs within them.

Additionally, the apparatus of the present invention would operate without a tapping section 24, however, the apparatus would suffer inferior condensate efficiency and process control.

A small proportion of the resultant fluid may delivered, by a pump 21, to the burner 15 which delivers energy to the apparatus. During the start-up sequence of the apparatus of the present invention, the burner 15 is supplied with hydrocarbons or methane. However, following initialisation of the apparatus, the resultant fluid can be used by the burner 15 to provide energy to the apparatus, thus decreasing the cost of running the apparatus of the present invention.

The apparatus of the present invention is designed to operate continuously.

Each of the components of the apparatus are designed to allow easy access for inspection and cleaning in accordance with the table of programmed tasks. The reactor 8 may be structured and shaped so that it can eliminate the waste materials that build up inside of it, i.e. those substances which do not produce any gasification or which behave as dead matter. To facilitate the elimination of waste materials, the reactor 8, may be slightly tilted to aid evacuation of the waste materials. Additionally, a circuit 14 for waste slagging may be arranged on the bottom of the reactor 8.

Although, the apparatus can also operate as a gasifier, i.e. producing a gas as the final product rather than a liquid, the construction and design of the apparatus of the present invention means that it operates more efficiently as a distiller with liquid as the final product.

The apparatus and method of the present invention adds oxygen O₂/Ozone O₃ to the heated substance in order to increase the pressure of the substance prior to it being cooled from a gas state into a liquid state by the first and second cooling sections. Therefore, the apparatus of the present invention exhibits increased efficiency, a cleaner liquid final product, and a shorter production time when compared with known distillation apparatus.

The method and apparatus of the present invention, differs from known distillation processes as it can process products such as tyres, Buna rubber etc., which have already been polymerised and not virgin products like crude oil.

## Claims

1. A distillation apparatus (100) comprising:
a reactor (8) having an input section for receiving a substance and an output section for outputting a gas;
a heating section (15) coupled to said reactor (8) for increasing the temperature of said substance input into said reactor (8); and
a first cooling section (16, 17) coupled to said output section of said reactor (8) for decreasing the temperature of said gas output from said reactor (8);
**characterised in that** the distillation apparatus (100) further comprises:
an oxygen or ozone section (12) and a pump (13) coupled to said reactor (8) for inputting pressurised oxygen or pressurised ozone into said reactor (8), the increase in temperature and the input of oxygen or ozone converting at least a portion of said substance into said gas, and wherein the inputting of oxygen or ozone into said reactor (8) increases the pressure inside said reactor (8); and
a tapping section (24) coupled between an input of said first cooling section (16, 17), an output of said oxygen or ozone section (12), and an input of said reactor (8), said tapping section (24) being capable of removing a predetermined amount of said cooled gas from said first cooling section (16, 17);
wherein the pressure of said removed gas is increased by a supply of oxygen or ozone from said oxygen or ozone section (12), and wherein said pressurised removed gas is input into said reactor (8).

2. The apparatus (100) according to claim 1, further comprising:
a second cooling section (18, 19), an input of said second cooling section (18, 19) being coupled to an output of said first cooling section (16, 17); and
a valve (18) coupled between said output of said first cooling section (16, 17) and said input of said second cooling section (19, 20).

3. The apparatus (100) according to claim 1 or claim 2, wherein said reactor (8) comprises an internal heating chamber and a pressurised reaction chamber, said internal heating chamber coupled to said heating section (15) and capable of operating at atmospheric pressure, and said pressurised reaction chamber coupled to an output of said oxygen or ozone section (12) and capable of operating at pressure greater than atmospheric pressure.

4. The apparatus (100) according to any one of claims 1 to 3, wherein a pump (25) is coupled between said first cooling section (16, 17) and said oxygen or ozone section (12), said pump (25) capable of increasing the pressure of said removed gas.

5. The apparatus (100) according to any one of claims 2 to 4, wherein the non-removed gas is input into said second cooling section (19, 20), via said valve (18).

6. The apparatus (100) according to claim 5, wherein said valve (18) decreases the pressure of said non-removed gas, and wherein said second cooling section (19, 20) decreases the temperature of said non-removed gas, to form a fluid substance.

7. The apparatus (100) according to claim 6, wherein said fluid substance is output from said second cooling section (19, 20) at atmospheric pressure.

8. The apparatus (100) according to any one of claims 1 to 7, further comprising:
a burner (15) capable of delivering energy to said apparatus (100), and wherein some of said fluid substance is used by said burner (15).

9. A distillation method comprising:
(a) increasing the temperature of a substance in a reactor (8);
(b) increasing simultaneously the pressure of said substance from atmospheric pressure by inputting pressurised oxygen or pressurised ozone into said reactor (8), the oxygen or ozone being at a pressure of between 10⁵ Pa to 10⁶ Pa and an input temperature of 10°C, wherein the increase in temperature and the input of oxygen or ozone converts at least a portion of said substance into a gas;
(c) removing the gas from the reactor (8);
(d) decreasing the temperature of said gas;
(e) removing a predetermined amount of said gas for reinsertion at step (b);
(f) decreasing the pressure of said gas; and
(g) decreasing further the temperature of said gas, to condense said gas into a liquid;
wherein the pressure of said removed gas is increased by the addition of oxygen or ozone prior to being reinserted at step (b).

## Patentansprüche

1. Destillationsvorrichtung (100), umfassend:
einen Reaktor (8) mit einem Einlassabschnitt zum Aufnehmen einer Substanz und einem Auslassabschnitt zum Ausgeben eines Gases;
einen Erwärmungsabschnitt (15), der an den Reaktor (8) gekoppelt ist, zum Erhöhen der Substanz, die in den Reaktor (8) eingebracht wird; und
einen ersten Kühlabschnitt (16, 17), der an den Auslassabschnitt des Reaktors (8) gekoppelt ist, zum Senken der Temperatur des Gases, das von dem Reaktor (8) abgegeben wird;
**dadurch gekennzeichnet, dass** die Destillationsvorrichtung (100) des Weiteren umfasst:
einen Sauerstoff- oder Ozonabschnitt (12) und eine Pumpe (13), die an den Reaktor (8) gekoppelt sind, zum Einbringen von mit Druck beaufschlagtem Sauerstoff oder mit Druck beaufschlagtem Ozon in den Reaktor (8), wobei der Anstieg in der Temperatur und die Zugabe von Sauerstoff oder Ozon mindestens einen Teil der Substanz in das Gas umwandeln, und wobei die Zugabe von Sauerstoff oder Ozon in den Reaktor (8) den Druck im Inneren des Reaktors (8) erhöht; und
einen Entnahmeabschnitt (24), der zwischen einem Einlass des ersten Kühlabschnitts (16, 17), einem Auslass des Sauerstoff- oder Ozonabschnitts (12) und einem Einlass des Reaktors (8) gekoppelt ist, wobei der Entnahmeabschnitt (24) imstande ist, eine vorbestimmte Menge des gekühlten Gases von dem ersten Kühlabschnitt (16, 17) zu entfernen;
wobei der Druck des entfernten Gases durch eine Zufuhr von Sauerstoff oder Ozon von dem Sauerstoff- oder Ozonabschnitt (12) erhöht wird, und wobei das mit Druck beaufschlagte, entfernte Gas in den Reaktor (8) eingebracht wird.

2. Vorrichtung (100) nach Anspruch 1, des Weiteren umfassend:
einen zweiten Kühlabschnitt (18, 19), wobei ein Einlass des zweiten Kühlabschnitts (18, 19) an einen Auslass des ersten Kühlabschnitts (16, 17) gekoppelt ist; und
ein Ventil (18), das zwischen dem Auslass des ersten Kühlabschnitts (16, 17) und dem Einlass des zweiten Kühlabschnitts (19, 20) gekoppelt ist.

3. Vorrichtung (100) nach Anspruch 1 oder Anspruch 2, wobei der Reaktor (8) eine interne Heizkammer und eine mit Druck beaufschlagte Reaktionskammer umfasst, wobei die interne Heizkammer an den Erwärmungsabschnitt (15) gekoppelt ist und imstande ist, bei atmosphärischem Druck zu arbeiten, und die mit Druck beaufschlagte Reaktionskammer an einen Auslass des Sauerstoff- oder Ozonabschnitts (12) gekoppelt ist und imstande ist, bei einem Druck über atmosphärischem Druck zu arbeiten.

4. Vorrichtung (100) nach einem der Ansprüche 1 bis 3, wobei eine Pumpe (25) zwischen dem ersten Kühlabschnitt (16, 17) und dem Sauerstoff- oder Ozonabschnitt (12) gekoppelt ist, wobei die Pumpe (25) imstande ist, den Druck des entfernten Gases zu erhöhen.

5. Vorrichtung (100) nach einem der Ansprüche 2 bis 4, wobei das nicht entfernte Gas in den zweiten Kühlabschnitt (19, 20) über das Ventil (18) eingebracht wird.

6. Vorrichtung (100) nach Anspruch 5, wobei das Ventil (18) den Druck des nicht entfernten Gases senkt und wobei der zweite Kühlabschnitt (19, 20) die Temperatur des nicht entfernten Gases senkt, um eine fluide Substanz zu bilden.

7. Vorrichtung (100) nach Anspruch 6, wobei die fluide Substanz von dem zweiten Kühlabschnitt (19, 20) bei atmosphärischem Druck ausgegeben wird.

8. Vorrichtung (100) nach einem der Ansprüche 1 bis 7, des Weiteren umfassend:
einen Brenner (15), der imstande ist, Energie an die Vorrichtung (100) abzugeben, und wobei etwas von der fluiden Substanz von dem Brenner (15) verwendet wird.

9. Destillationsverfahren, umfassend:
(a) Erhöhen der Temperatur einer Substanz in einem Reaktor (8);
(b) gleichzeitiges Erhöhen des Drucks der Substanz von atmosphärischem Druck durch Einbringen von mit Druck beaufschlagtem Sauerstoff oder mit Druck beaufschlagtem Ozon in den Reaktor (8), wobei der Sauerstoff oder das Ozon einen Druck von 10⁵ Pa bis 10⁶ Pa und eine Eintrittstemperatur von 10°C aufweist, wobei die Erhöhung in der Temperatur und das Einbringen von Sauerstoff oder Ozon mindestens einen Teil der Substanz in ein Gas umwandeln;
(c) Entfernen des Gases von dem Reaktor (8);
(d) Senken der Temperatur des Gases;
(e) Entfernen einer vorbestimmten Menge des Gases zum erneuten Einbringen in Schritt (b);
(f) Senken des Drucks des Gases; und
(g) weiteres Senken der Temperatur des Gases, um das Gas zu einer Flüssigkeit zu kondensieren;
wobei der Druck des entfernten Gases durch die Zugabe von Sauerstoff oder Ozon erhöht wird, bevor dieses wieder in Schritt (b) eingebracht wird.

## Revendications

1. Appareil de distillation (100) comprenant :
un réacteur (8) ayant une section d'entrée pour recevoir une substance et une section de sortie pour faire sortir un gaz ;
une section de chauffe (15) couplée audit réacteur (8) pour augmenter la température de ladite substance introduite dans ledit réacteur (8) ; et
une première section de refroidissement (16, 17) couplée à ladite section de sortie dudit réacteur (8) pour réduire la température dudit gaz sortant dudit réacteur (8) ;
**caractérisé en ce que** l'appareil de distillation (100) comprenne par tailleurs :
une section à oxygène ou ozone (12) et une pompe (13) couplée audit réacteur (8) pour faire entrer de l'oxygène sous pression ou de l'ozone sous pression à l'intérieur dudit réacteur (8), l'augmentation de la température et l'introduction d'oxygène ou d'ozone convertissant au moins une partie de ladite substance en ledit gaz, et l'introduction d'oxygène ou d'ozone à l'intérieur dudit réacteur (8) augmentant la pression à l'intérieur dudit réacteur (8) ; et
une section de dérivation (24) couplée entre une entrée de ladite première section de refroidissement (16, 17), une sortie de ladite section à oxygène ou à ozone (12), et une entrée dudit réacteur (8), ladite section de dérivation (24) étant capable d'enlever une quantité prédéterminée dudit gaz refroidi de ladite première section de refroidissement (16, 17) ;
la pression dudit gaz enlevé augmentant du fait d'une alimentation en oxygène ou ozone à partir de ladite section à oxygène ou à ozone (12), et ledit gaz sous pression enlevé étant introduit dans ledit réacteur (8) .

2. Appareil (100) selon la revendication 1, comprenant par tailleurs :
une deuxième section de refroidissement (18, 19), une entrée de ladite deuxième section de refroidissement (18, 19) étant couplée avec une sortie de ladite première section de refroidissement (16, 17) ; et
une valve (18) couplée entre ladite sortie de ladite première section de refroidissement (16, 17) et ladite entrée de ladite deuxième section de refroidissement (19, 20).

3. Appareil (100) selon la revendication 1 ou la revendication 2, ledit réacteur (8) comprenant une chambre de chauffe interne et une chambre de réaction pressurisée, ladite chambre de chauffe interne étant couplée à ladite section de chauffe (15) et étant capable de fonctionner sous pression atmosphérique, et ladite chambre de réaction pressurisée étant couplée avec une sortie de ladite section à oxygène ou à ozone (12) et étant capable de fonctionner avec une pression supérieure à la pression atmosphérique.

4. Appareil (100) selon l'une quelconque des revendications 1 à 3, une pompe (25) étant couplée entre ladite première section de refroidissement (16, 17) et ladite section à oxygène ou à ozone (12), ladite pompe (25) pouvant augmenter la pression dudit gaz enlevé.

5. Appareil (100) selon l'une quelconque des revendications 2 à 4, le gaz non enlevé étant introduit dans ladite deuxième section de refroidissement (19, 20) via ladite valve (18).

6. Appareil (100) selon la revendication 5, ladite valve (18) réduisant la pression dudit gaz non enlevé, et ladite deuxième section de refroidissement (19, 20) réduisant la température dudit gaz non enlevé, afin de former une substance fluide.

7. Appareil (100) selon la revendication 6, ladite substance fluide sortant de ladite deuxième section de refroidissement (19, 20) sous pression atmosphérique.

8. Appareil (100) selon l'une quelconque des revendications 1 à 7, comprenant par ailleurs :
un brûleur (15) pouvant alimenter en énergie ledit appareil (100), et une partie de ladite substance fluide étant utilisée par ledit brûleur (15).

9. Méthode de distillation comprenant :
(a) l'augmentation de la température d'une substance dans un réacteur (8) ;
(b) l'augmentation simultanée de la pression de ladite substance en partant de la pression atmosphérique en faisant entrer de l'oxygène sous pression ou de l'ozone sous pression à l'intérieur dudit réacteur (8), l'oxygène ou l'ozone étant à une pression comprise entre 10⁵ Pa à 10⁶ Pa et à une température d'entrée de 10°C, l'augmentation de la température et l'introduction d'oxygène ou d'ozone convertissant au moins une partie de ladite substance en un gaz ;
(c) retrait du gaz du réacteur (8) ;
(d) diminution de la température dudit gaz ;
(e) retrait d'une quantité prédéterminée dudit gaz pour la réinsertion à l'étape (b) ;
(f) réduction de la pression dudit gaz ; et
(g) nouvelle diminution de la température dudit gaz, afin de condenser ledit gaz en un liquide ; la pression dudit gaz enlevé augmentant du fait de l'ajout d'oxygène ou d'ozone avant sa réinsertion à l'étape (b).
